# EUROPEAN PATENT APPLICATION

(11) **EP 1 080 812 A2**
(43) Date of publication of application: **07.03.2001**
(21) Application number: 00307445.7
(22) Date of filing: 30.08.2000
(51) Int. Cl.: B23B 27/16, B23B 51/00, B23B 49/04

(54) **Cutting tool and throwaway center drill**

(30) Priority: 31.08.1999 JP 24630399; 25.08.2000 JP 2000256329
(71) Applicant: NGK SPARK PLUG CO., LTD, Mizuho-ku Nagoya-shi Aichi (JP)
(72) Inventor: Takeuchi, Shinya, NGK Spark Plug Co., Ltd., Nagoya, Aichi (JP); Shirai, Makoto, NGK Spark Plug Co., Ltd., Nagoya, Aichi (JP); Hasegawa, Takashi, NGK Spark Plug Co., Ltd., Nagoya, Aichi (JP)
(74) Representative: Nicholls, Michael John

(57) **Abstract**

A cutting tool which is attached to a main tool post located laterally with respect to a rotation axis and which is adapted to perform center-hole cutting on the end face of a shaft member is disclosed.

A cutting tool 1 includes a holder 2 and a throwaway center drill 21 clamped to an end of the holder 2. The throwaway center drill 21 has two cutting edges 26 and 27 formed at corresponding opposite sides thereof such that a direction intersecting the longitudinal direction of the holder 2 serves as drill axis G1. The throwaway center drill 21 assumes the shape of a polygonal plate, and a basal portion 31 thereof to be clamped to the holder 2 is biased laterally with respect to the drill axis G1. While the cutting tool 1 is attached to a main tool post, end-face turning is performed to thereby effect center-hole cutting.

## Description

The present invention relates to a cutting tool and a throwaway center drill used to form a relatively shallow depression or hole (hereinafter may be called a center hole), such as countersinking or spot facing, at the center of an end face of a shaft member or a cylindrical part to be turned (hereinafter may be simply called a shaft member).

Conventionally, such center-hole cutting is performed for a shaft member, which is an article to be machined (hereinafter may be called a workpiece), in the following manner. While the shaft member is rotated, a center drill which is held, by means of a holder or a sleeve, on a tool post (or a tailstock) located on the end-face side of the shaft member is pressed against the end face of the shaft member along the rotation axis of the shaft member.

However, a certain machine (automatic lathe, also called a numerical control lathe or NC lathe) has a tool post (hereinafter called a main tool post) located laterally with respect to the rotation axis of a workpiece only and does not have a tool post (or tailstock) located at the end-face side of a chucked shaft member. Such machinery cannot perform center-hole cutting (hereinafter may be called center drilling) in the above-mentioned manner. This often arises with an NC lathe used to machine small parts or precision shaft members having a diameter of not greater than 10 mm, such as shaft members for use in office automation equipment (OA equipment) and precision equipment.

The present invention has been accomplished in view of the above-mentioned problems, and an object of the present invention is to provide a cutting tool which enables cutting of a relatively shallow center hole on the end face of a shaft member or cylindrical part even in a machine (automatic lathe) which does not have a tool post (or tailstock) located at the end-face side of the chucked shaft member, as well as to provide a throwaway center drill for use with the cutting tool.

Accordingly, the present invention provides a cutting tool characterized in that a throwaway center drill is clamped (fixedly attached) to a holder, the throwaway center drill having two cutting edges and a drill axis intersecting the longitudinal direction of the holder. The invention also provides a cutting tool characterized in that a throwaway center drill is clamped (fixedly attached) to a holder, the throwaway center drill having one cutting edge and a drill axis intersecting the longitudinal direction of the holder

Preferably, in the above cutting tools, the longitudinal direction of the holder (the direction along which the holder extends) and the drill axis intersect at a substantially perpendicular angle. Preferably, the throwaway center drill is clamped to an end of the holder. The shape and included angle of the cutting edges may be determined according to the type of center-hole cutting, such as countersinking (taper-hole cutting), spot facing, counterboring, or drilling. Furthermore, a relief angle and other features of the cutting edges may be determined as appropriate according to machining conditions (materials of workpiece and drill, etc.).

While a workpiece is chucked by a lathe and rotated, the cutting tool of the present invention is attached to a main tool post and pressed against the end face of the workpiece such that the drill axis is aligned with the center of the end face. Thus is performed center-hole cutting. As in the case of turning by use of an ordinary cutting tool, a holder is attached to the main tool post, and a center hole is cut on the end face of the workpiece through turning. Since a tip used in the cutting tool first described above has two cutting edges, the cutting-edge strength is doubled as compared with the cutting tool to which is fixed a tip having one cutting edge. Accordingly, for a given feed rate, cutting-edge life of the cutting tool is approximately double that of the throwaway tip of the cutting tool described as having one cutting edge. If the cutting tool with two cutting edges is permitted to merely exhibit the same cutting-edge life as that of the cutting tool with one cutting edge, cutting efficiency is improved greatly, since employment of two cutting edges enables doubling of feed.

According to a further aspect, the present invention provides a throwaway center drill which assumes the shape of a polygonal plate, and a basal portion thereof to be clamped to the holder (a basal portion thereof to be fixedly attached to the holder) is biased laterally with respect to the drill axis and integrated with the cutting edges. That is, one throwaway center drill of the present invention is characterized by assuming the shape of a polygonal plate and having two cutting edges (drill cutting edges) and characterized in that the basal portion thereof to be clamped to the holder is biased laterally with respect to the drill axis passing between the cutting edges and integrated with the cutting edges. Another throwaway center drill of the present invention is characterized by assuming the shape of a polygonal plate and having one cutting edge (drill cutting edge) and characterized in that the basal portion thereof to be clamped to the holder is biased laterally with respect to the drill axis of the cutting edge and integrated with the cutting edge.

Through employment of the above-described structural features, a throwaway center drill of the present invention which is used for formation of a shallow center hole can be formed from, for example, a conventional polygonal-plate-shaped tip, such as a rhombus or triangular tip (throwaway tip). Specifically, the conventional tip is subjected to grinding or polishing in order to form two cutting edges on opposite surfaces (or form one cutting edge on one surface) at one corner (or a plurality of corners) thereof. The thus-formed throwaway center drill allows use of an existing holder (conventionally used holder) with almost no modification thereof.

Preferably, the holder has a restraint wall for restraining a peripheral portion of the polygonal-plate-shaped basal portion of the throwaway center drill, and the peripheral portion of the basal portion of the throwaway center drill is restrained by the restraint wall. Since the throwaway center drill is clamped while being restrained by the restraint wall, the drill axis can be held at a constant position with ease, thereby facilitating and speeding up replacement of the throwaway center drill.

Clamp means (attachment means) for clamping the throwaway center drill to the holder may be of a clamp-on type or a screw clamp type. Preferably, the throwaway center drill has a through-hole formed in the basal portion, and a screw member is inserted through the through-hole and screwed into a tapped hole formed in the holder to thereby clamp the throwaway center drill to the holder. This clamp means avoid structural complexity and is thus preferred.

Embodiments of the invention will now be described, by way of example only, with reference to the accompanying drawings in which:-

FIG. 1 is a view of a first embodiment of the cutting tool according to the present invention and an enlarged plan view of a main portion of the cutting tool.

FIG. 2 is a view of the main portion of FIG. 1 as seen from the direction of arrow A.

FIG. 3 is a view of the main portion of FIG. 1 as seen from the direction of arrow B.

FIG. 4 is an enlarged view of cutting-edge portions of FIG. 1.

FIG. 5 is an enlarged view of cutting-edge portions of FIG. 2.

FIG. 6 is an enlarged view of cutting-edge portions of FIG. 3.

FIG. 7 is an exploded perspective view of the cutting tool of FIG. 1.

FIG. 8 is a plan view of a main portion of a second embodiment of the cutting tool according to the present invention.

FIG. 9 is an enlarged view of cutting-edge portions of FIG. 8.

FIG. 10 is a view of the main portion of FIG. 9 as seen from the direction of arrow A.

FIG. 11 is a view of the main portion of FIG. 9 as seen from the direction of arrow B.

FIG. 12 is an exploded perspective view of the cutting tool of FIG. 8.

FIG. 13 is an enlarged plan view of a main portion of a third embodiment of the cutting tool according to the present invention and an enlarged view of a cutting edge portion.

FIG. 14 is an enlarged view of the cutting edge portion of FIG. 13 as seen from the direction of arrow A.

FIG. 15 is an enlarged view of the cutting edge portion of FIG. 13 as seen from the direction of arrow B.

FIG. 16 is an enlarged plan view of a main portion of a fourth embodiment of the cutting tool according to the present invention and an enlarged view of a cutting edge portion.

FIG. 17 is an enlarged view of the cutting edge portion of FIG. 16 as seen from the direction of arrow A.

FIG. 18 is an enlarged view of the cutting edge portion of FIG. 16 as seen from the direction of arrow B.

FIG. 19 is an enlarged plan view showing another example of the cutting edge portion in the fourth embodiment.

Reference numerals are used to identify items shown in the drawings as follows:
1, 41, 51, 81: cutting tools
2: holder
5, 6: restraint walls
9: tapped hole formed in holder
11: screw member
26, 27, 66, 67, 96: cutting edges
21, 61, 71, 91: throwaway center drills
23, 24: peripheral portions of basal portion to be clamped
31: basal portion of throwaway center drill to be clamped
33: through-hole formed in basal portion to be clamped
G1: drill axis

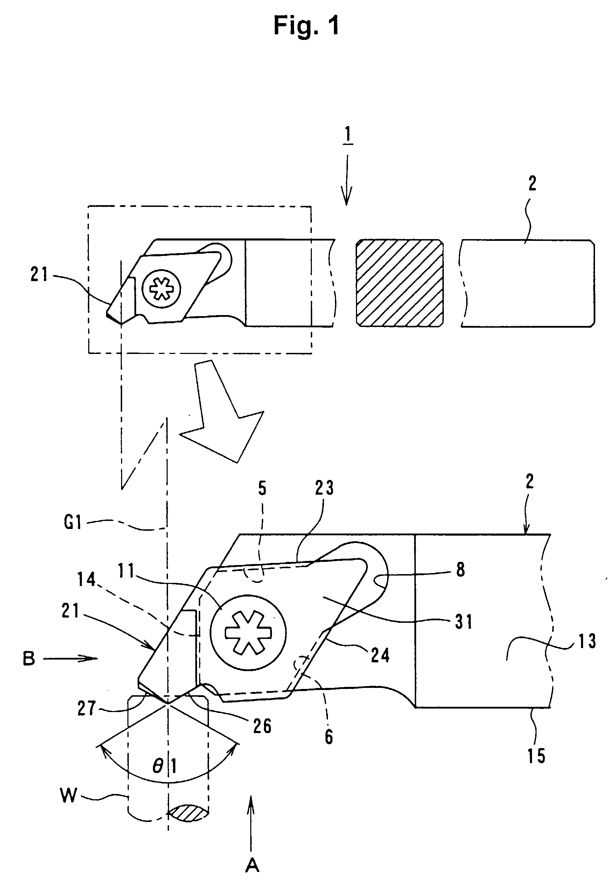

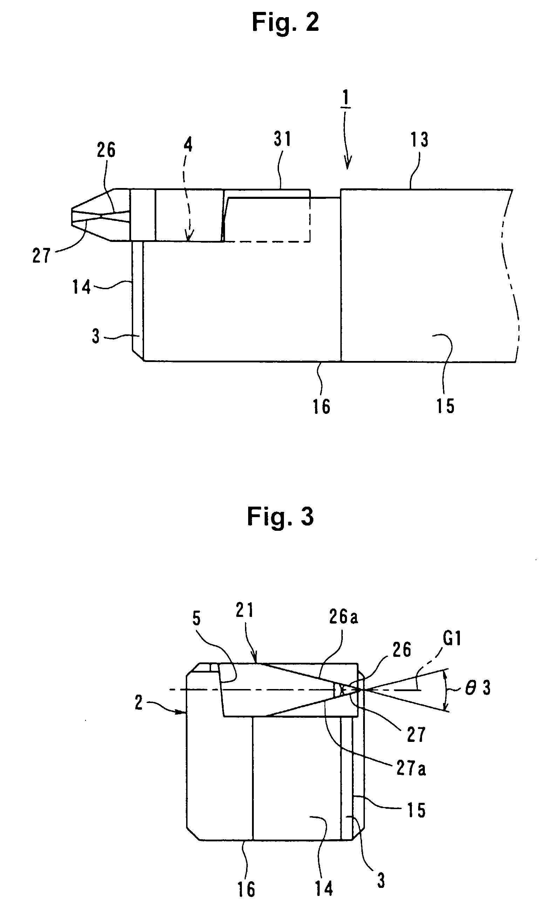

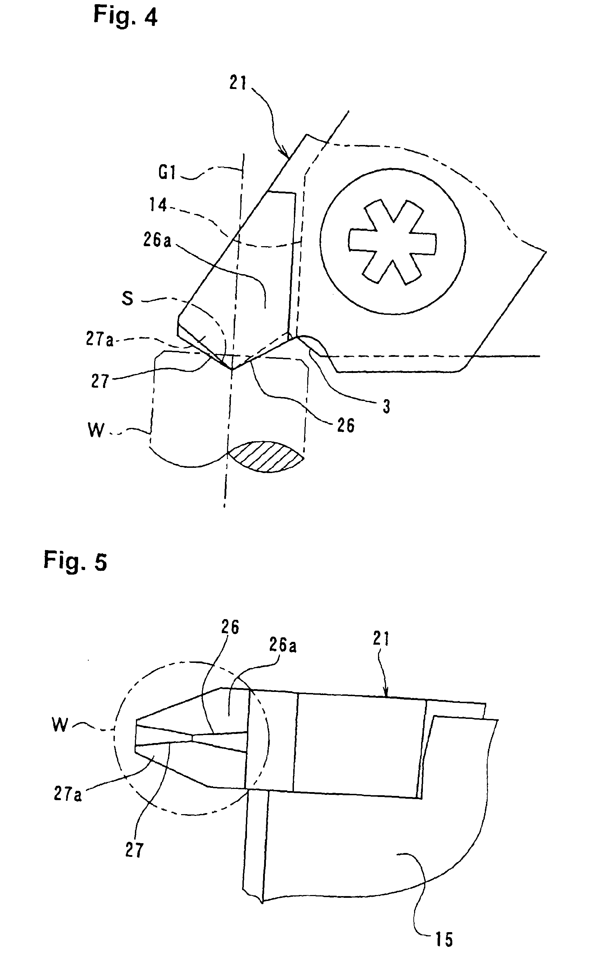

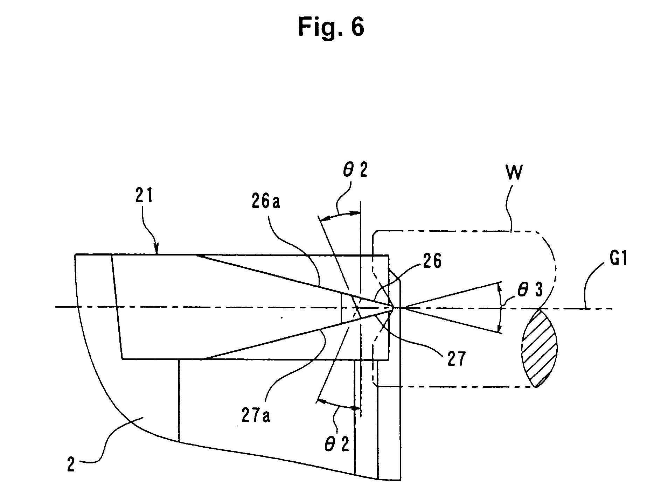

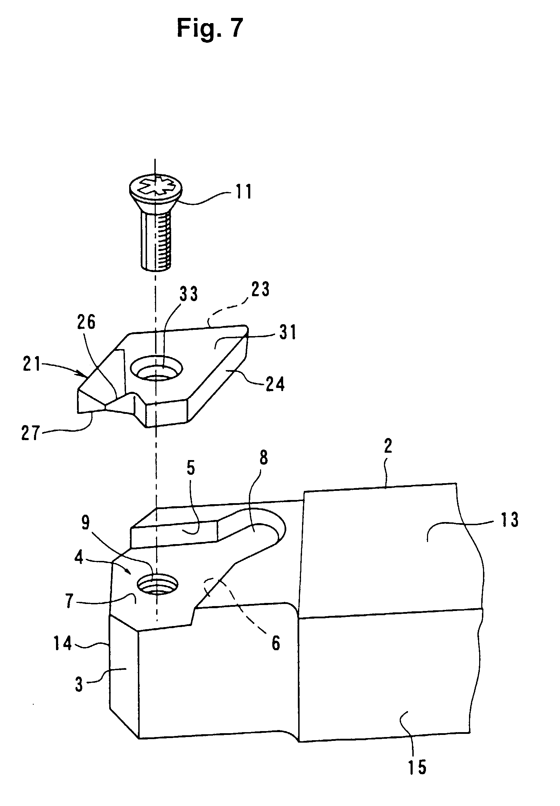

A first embodiment of the cutting tool according to the present invention will next be described in detail with reference to FIGS. 1 to 7. FIG. 1 is a plan view of a cutting tool according to the present invention and an enlarged plan view of a main portion of the cutting tool. FIG. 2 is a view of the main portion of FIG. 1 as seen from the direction of arrow A. FIG. 3 is a view of the main portion of FIG. 1 as seen from the direction of arrow B. FIGS. 4 to 6 are enlarged views of cutting-edge portions of FIGS. 1 to 3, respectively. FIG. 7 is an exploded perspective view of the cutting tool of FIG. 1.

In these drawings, reference numeral 1 denotes a cutting tool, and reference numeral 2 denotes an elongated holder (shank) having a substantially square cross section. An end portion of the holder 2 is slightly narrower than the remaining portion of the holder 2. A top face 13 of the holder end portion is lower than that of the remaining portion of the holder 2. A tip reception recess 4 is formed on the top face 13 of the holder end portion in such a manner as to open to an end face (lefthand face in FIG. 1) 14 and to one side face (lower face in FIG. 1) 15. This recess 4 is defined by two restraint walls 5 and 6, which intersect each other at an angle of 55 degrees as viewed from above, and a seat face 7. The two restraint walls 5 and 6 are configured so as to receive a polygonal-plate-shaped throwaway center drill 21, which will be described next, in the following manner. Two linear peripheral portions 23 and 24, which define one corner of the throwaway center drill 21, are brought in close contact with the restraint walls 5 and 6.

A screw member (clamp screw) 11 is screwed into a tapped hole 9, which is formed in the holder 2 perpendicularly to the seat face 7, to thereby clamp the throwaway center drill 21 to the holder 2. The above-described holder 2 is configured in a manner substantially similar to that for a rhombus tip (throwaway tip) used conventionally for turning. A clearance recess 8 is formed at a corner of the recess 4 formed in the holder 2. An intersection portion 3 of the front face 14 and the side face 15 to which the recess 4 opens is chamfered.

The throwaway center drill 21 substantially assumes a rhombus shape as viewed from above. Drill axis G1 extends at one acute corner of the throwaway center drill 21 perpendicularly to the longitudinal direction (horizontal direction in FIG. 1) of the holder 2 as viewed from above. Two cutting edges 26 and 27 are formed at opposite sides of the throwaway center drill 21 through polishing. In the present embodiment, the two cutting edges 26 and 27 are adapted to perform countersinking. Accordingly, the cutting edges 26 and 27 are formed in such a manner as to assume an included angle θ1 of 120 degrees and to project sideward (downward in FIG. 1). The throwaway center drill 21 is caused to abut the end face of a workpiece such that the drill axis G1 aligns with the center of the end face. Each of the cutting edges 26 and 27 assumes a clearance angle θ2 of, for example, 10 degrees.

In the present embodiment, the cutting edge 27 is located on the side of a bottom face 16 of the holder 2 and on the side of the end of the holder 2. Chips produced through turning by means of the cutting edge 27 move on a rake face 27a of the cutting edge 27 and are then ejected while being guided along the intersection portion 3 located at the end of the holder 2 and the end face 14. The length of each of the cutting edges 26 and 27; i.e., the amount of projection of each of the cutting edges 26 and 27 as measured along the drill axis G1, may be determined according to the depth and diameter of a countersink (center hole). A rake face 26a of the cutting edge 26 and the rake face 27a of the cutting edge 27 form an angle θ3 of 30 degrees.

The throwaway center drill 21 is formed from a rhombus throwaway tip as described above. A portion of the throwaway center drill 21 other than the cutting edges and rake faces (a right-hand portion in FIG. 1) serves as a basal portion 31 to be clamped to the holder 2. The throwaway center drill 21 is clamped while the peripheral portions 23 and 24 are restrained against the restraint walls 5 and 6 which define the recess 4 of the holder 2. As in the case of a throwaway turning tip having a hole formed therein, a through-hole 33 is formed in the basal portion 31 in the thickness direction. The throwaway center drill 21 is placed on the seat face 7 of the recess 4 of the holder 2. Then, the screw member (clamp screw) 11 is inserted into the through-hole 33 formed in the throwaway center drill 21 and screwed into the tapped hole 9 formed on the seat face 7. As a result, the throwaway center drill 21 is clamped to the holder 2 while being restrained against the restraint walls 5 and 6 which define the recess 4 of the holder 2.

Thus, even when the cutting tool 1 is to be used with a lathe in which a tool post (tailstock) is not located on the end-face side of a workpiece, as in the case of end-face turning, the holder 2 of the cutting tool 1 is clamped on a main tool post of an unillustrated lathe such that the drill axis G1 is in parallel with the rotation axis of the workpiece W. Next, the drill axis G1 and the rotation axis of the workpiece W are aligned with each other. Then, the tool post is fed by a predetermined amount along the drill axis G1. As a result, a countersink Z is formed at the center of the end face of the workpiece W by means of the two cutting edges of the throwaway center drill 21.

That is, the cutting tool 1 of the present embodiment can perform center-hole cutting even on a machine in which a tool post is not located on the end-face side of a workpiece, in a manner similar to that of conventional turning. Specifically, the cutting tool 1 is attached to a main tool post located laterally with respect to the rotation axis. Then, end-face turning is performed to thereby form a center hole on the end face of the workpiece.

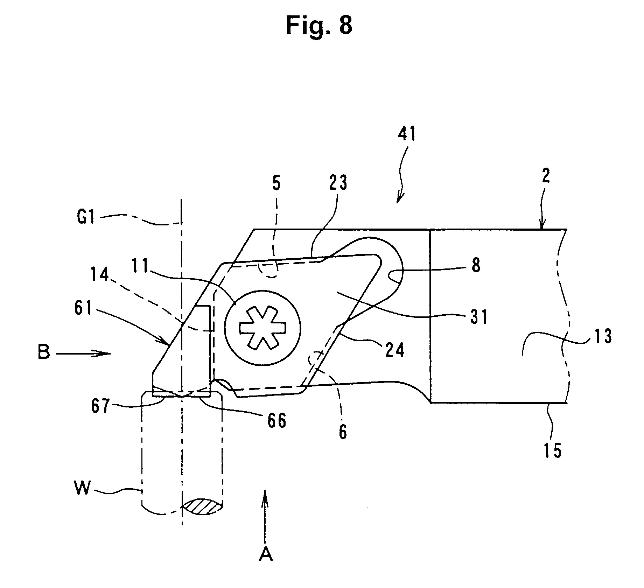

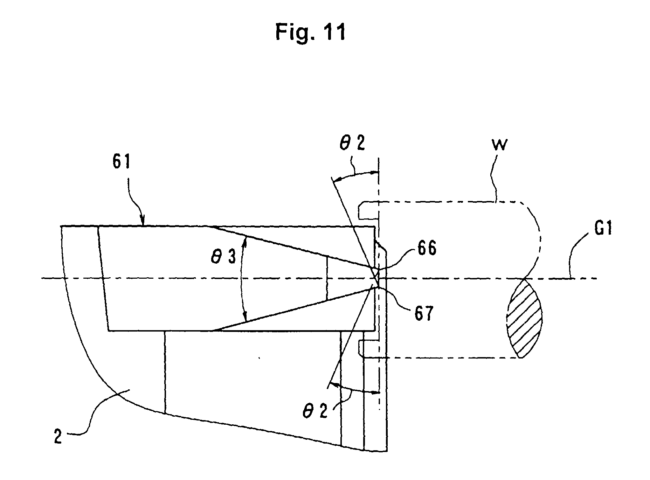

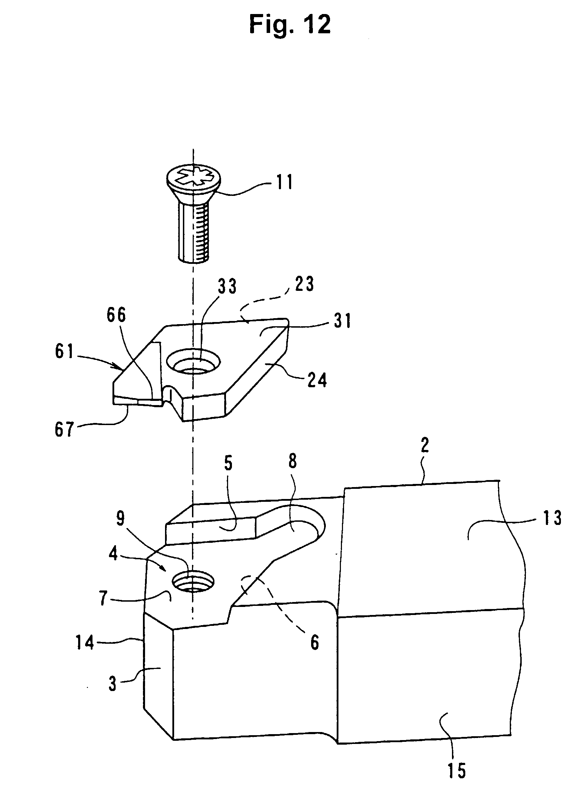

A second embodiment of the cutting tool of the present invention will next be described in detail with reference to FIGS. 8 to 12. The present embodiment differs from the previously described embodiment merely in that two cutting edges of a throwaway center drill are intended for spot facing, whereas the two cutting edges of the throwaway center drill of the previous embodiment are intended for countersinking. Since the present embodiment is basically similar to the previously described embodiment, only different features will be described, while common features are denoted by common reference numerals.

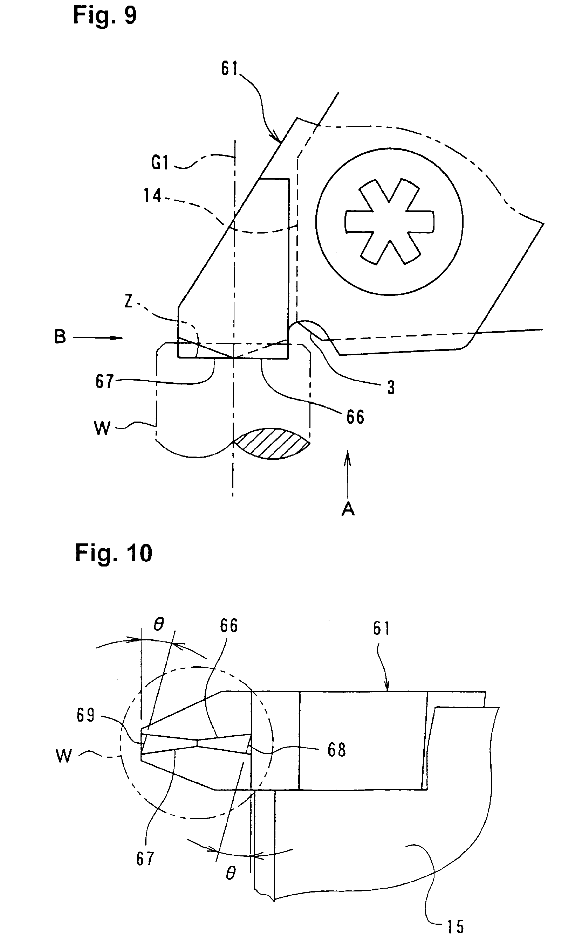

A throwaway center drill 61 of a cutting tool 41 has cutting edges 66 and 67 which are formed at the opposite sides thereof perpendicularly to the drill axis G1. As shown in FIGS. 8 and 9, the drill axis G1 is aligned with the rotation axis of the workpiece W, and then the cutting tool 41 is fed along the rotation axis of the workpiece W so as to press the cutting edges 66 and 67 against the end face of the workpiece W, thereby forming spot-faced hole Z at the center of the end face. Since the throwaway center drill 61 of the present embodiment is adapted for formation of a spot-faced hole, as shown in FIG. 10, side clearance surfaces 68 and 69 of the cutting edges 66 and 67 opposite the axis G1 each have a side clearance angle θ.

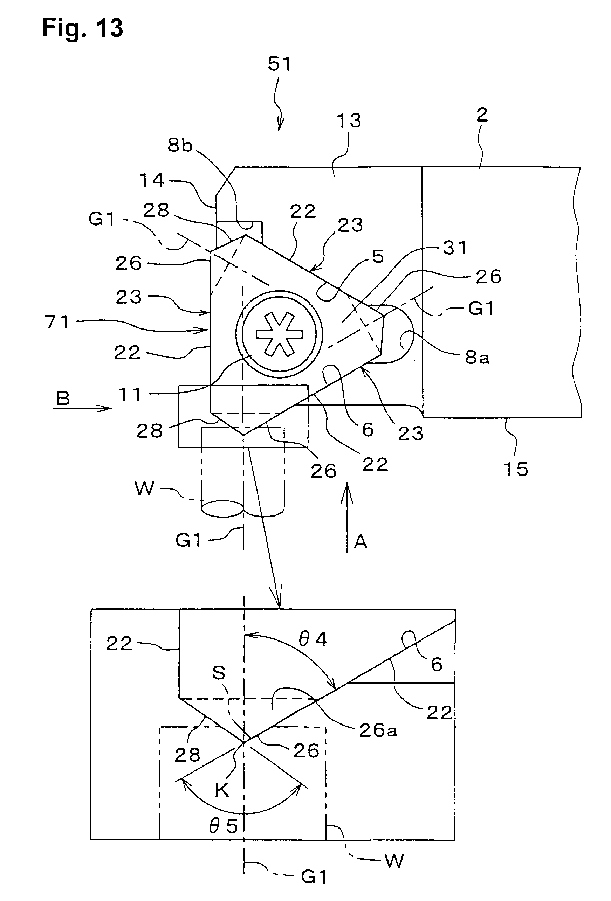

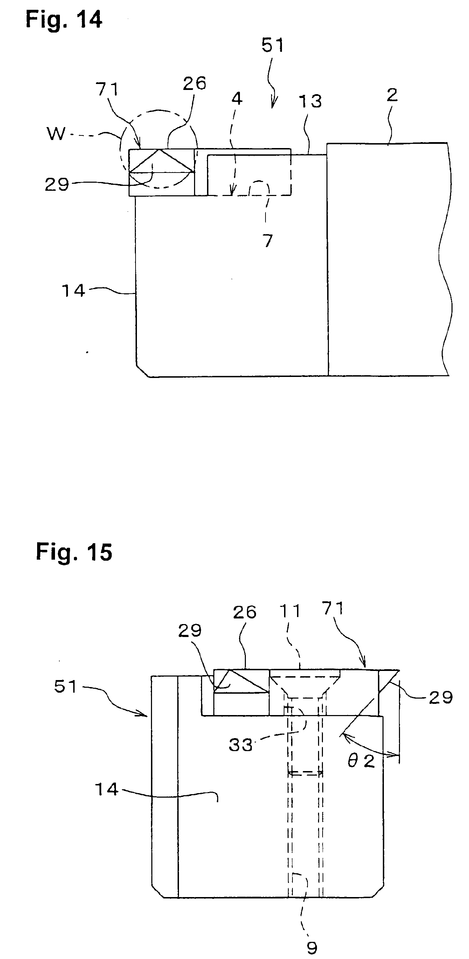

Next, a third embodiment of the cutting tool of the present invention will be described in detail with reference to FIGS. 13 to 15. The present embodiment differs from the first embodiment merely in that a throwaway center drill 71 has an overall shape of a substantially equilateral triangle as viewed from above, and a single cutting edge 26 for countersinking is provided in the vicinity of each corner thereof. Therefore, the description is concentrated on the different features. Common or corresponding features are denoted by common reference numerals, and their descriptions will be omitted if appropriate. FIG. 13 is an enlarged plan view of a main portion of a cutting tool according to the present invention and an enlarged view of a cutting edge portion. FIG. 14 is a view of the main portion of FIG. 13 as seen from the direction of arrow A. FIG. 15 is a view of the main portion of FIG. 13 as seen from the direction of arrow B.

In these drawings, reference numeral 51 denotes a cutting tool, and reference numeral 2 denotes an elongated holder (shank) having a substantially square cross section. An end portion of the holder 2 is slightly narrower than the remaining portion of the holder 2. A top face 13 of the holder end portion is lower than that of the remaining portion of the holder 2. A tip reception recess 4 is formed on the top face 13 of the holder end portion in such a manner as to open to an end face (lefthand face in FIG. 13) 14 and to one side face (lower face in FIG. 13) 15. In the present embodiment, the recess 4 is defined by two restraint walls 5 and 6, which intersect each other at an angle of 60 degrees as viewed from above, and a seat face 7. The two restraint walls 5 and 6 are configured so as to receive a throwaway center drill 71, which has a shape of a substantially equilateral triangle as viewed from above and which will be described next. That is, peripheral portions 23 along two straight sides 22, which define one corner of the throwaway center drill 71, are brought in close contact with the restraint walls 5 and 6. Notably, the recess 4 is configured such that when the throwaway center drill 71 is clamped, one straight side 22 of the triangular drill becomes perpendicular to the longitudinal direction (horizontal direction in FIG. 13) of the holder 22 as viewed from above.

A screw member (clamp screw) 11 is screwed into a tapped hole 9, which is formed in the holder 2 perpendicularly to the seat face 7, to thereby clamp the throwaway center drill 71 to the holder 2. Clearance recesses (spaces) 8a and 8b are formed at portions of the recess 4 which correspond to two corners of the clamped throwaway center drill 71 which do not contribute to cutting.

In the present embodiment, the throwaway center drill 71 assumes an overall shape of a substantially equilateral triangular as viewed from above, and has a cutting edge 26 for countersinking at each corner. Notably, a single cutting edge 26 is formed on one surface (the surface shown in the drawing). When the drill 71 is fixed to the recess 4, the drill 71 provides a drill axis G1 which extends perpendicularly to the longitudinal direction of the holder 2 (horizontal direction in FIG. 13) as viewed from above. Further, in the preset embodiment, each corner of the drill is chamfered to form a chamfered portion 28 as viewed from above, and the cutting edge 26 is formed in the vicinity of the intersection K between each chamfered portion 28 and the corresponding side 22 of the triangle such that the cutting edge 26 extends along the side 22. In the present embodiment, the angle θ4 formed between the drill axis G1 and the single cutting edge 26 as viewed from above is set to 60 degrees. On the other hand, the cross angle θ5 formed between the single cutting edge 26 and the chamfered portion 28 is set to 115 degrees in order to increase the cutting-edge strength. The clearance angle θ2 of the cutting edge 26 is set to, for example, 35 degrees, and the tip end of the cutting edge 26 has a beak-like shape as viewed from the lateral side, such that the tip end does not hinder cutting of a countersink (center hole) of 120 degrees. Thus, the cutting edge 26 is projected sideward (downward in FIG. 13) from the tip end of the holder 2. The throwaway center drill 71 is fed along the drill axis G1 such that the intersection K abuts the center of the end face of a workpiece. Thus, a countersink of 120 degrees is formed.

As described above, the drill 71 of the present embodiment is formed from a triangular throwaway tip. A portion of the throwaway center drill 71 located on one side (a right-hand side in FIG. 13) with respect to the drill axis G1 of the rake face 26a of each cutting edge 26 serves as a basal portion 31 to be clamped to the holder 2. The throwaway center drill 71 is clamped while the peripheral portions 23 are restrained against the restraint walls 5 and 6 of the recess 4 of the holder 2. Notably, in the present embodiment, the cutting edge 26 is provided at each of the three corners. Therefore, when the drill 71 is clamped such that a certain cutting edge 26 can be used for cutting, the basal portion 31 is constituted for the certain cutting edge 26. Further, as in the case of a conventional throwaway tip having a hole formed therein, in the present embodiment, a through-hole 33 is formed in the basal portion 31 in the thickness direction. The drill 71 is placed on the seat face 7 of the recess 4 of the holder 2. Then, the screw member (clamp screw) 11 is inserted into the through-hole 33 formed in the drill 71 and screwed into the tapped hole 9 formed on the seat face 7. As a result, the drill 71 is clamped to the holder 2 while being restrained against the restraint walls 5 and 6 which define the recess 4 of the holder 2.

Thus, even when the cutting tool 51 is to be used with a lathe in which a tool post (tailstock) is not located on the end-face side of a workpiece W, as in the case of end-face turning, the holder 2 of the cutting tool 51 is clamped on a main tool post of an unillustrated lathe such that the drill axis G1 of the drill 71 is in parallel with the rotation axis of the workpiece W. Next, the drill axis G1 and the rotation axis of the workpiece W are aligned with each other. Then, the main tool post is fed by a predetermined amount along the drill axis G1. As a result, a countersink S of 120 degrees is formed at the center of the end face of the workpiece W by means of the single cutting edge 26 of the throwaway center drill 71.

That is, the cutting tool 51 of the present embodiment can perform center-hole cutting even on a machine in which a tool post is not located on the end-face side of a workpiece W, in a manner similar to that of conventional turning. Specifically, the cutting tool 51 is attached to the main tool post located laterally with respect to the rotation axis. Then, end-face turning is performed to thereby form a center hole on the end face of the workpiece.

In the present embodiment, since a single cutting edge 26 is provided at each corner, the service life of the cutting edge 26 at each corner decreases as compared with the cutting tools of the first and second embodiments. However, since the cutting edge 26 is provided at each corner of the triangle, the overall service life of the drill can be increased. Further, since the cutting edge has a simple configuration, the production cost is expected to decrease.

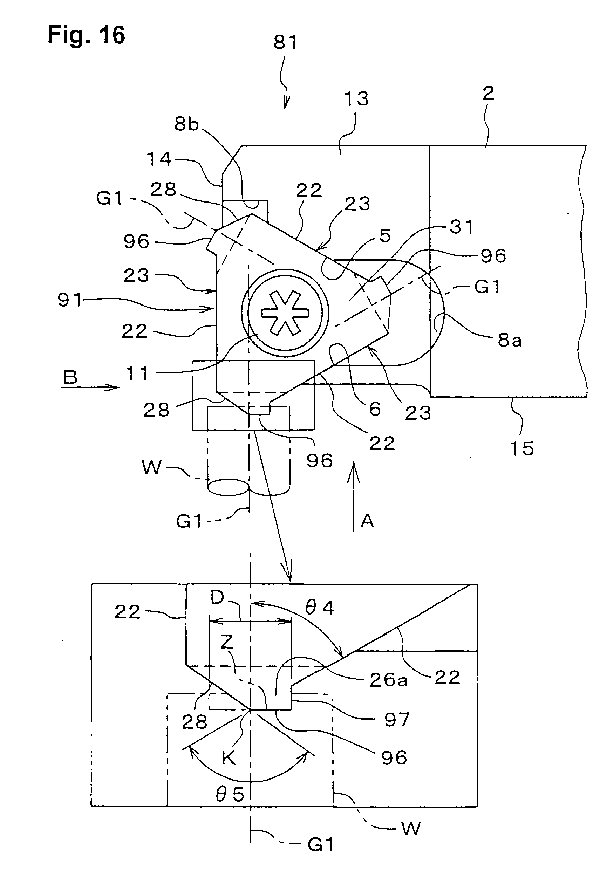

A fourth embodiment of the cutting tool of the present invention will next be described in detail with reference to FIGS. 16 to 18. The present embodiment differs from the previously described embodiment merely in that instead of a single cutting edge for countersinking, a single cutting edge for spot facing is employed. Since the present embodiment is basically similar to the previously described embodiment, only different features will be described, while common features are denoted by common reference numerals.

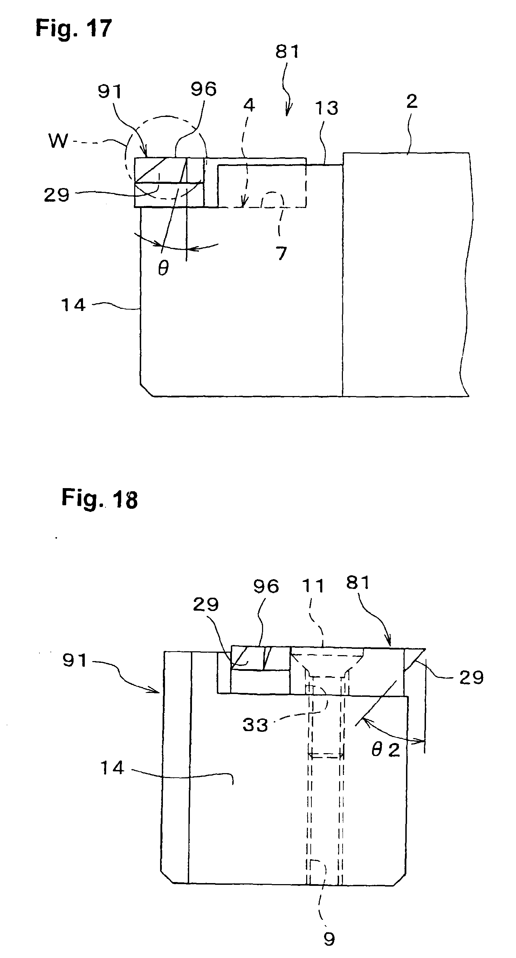

That is, in the present embodiment, a throwaway center drill 91 of a cutting tool 81 has a cutting edge 96 for spot facing which is formed on one surface such that the cutting edge 96 is located one side of the drill axis G1 and extends perpendicularly thereto. A margin 97 is formed along an end of the cutting edge 96 opposite the drill axis G1 such that the margin 97 becomes continuous with the straight side 22. The radius of the cutting edge 96 is set in accordance with a spot facing diameter D, and the margin 97 located on the outer side of the cutting edge 96 has a back taper such that a slight clearance angle is formed. Since the throwaway center drill 91 of the present embodiment is adapted for formation of a spot-faced hole, as shown in FIG. 17, the margin 97 has a side clearance angle θ. Further, as shown in the drawing, in the present embodiment as well, the corner which is continuos with the cutting edge 96 as viewed from above is chamfered to thereby increase the cutting-edge strength.

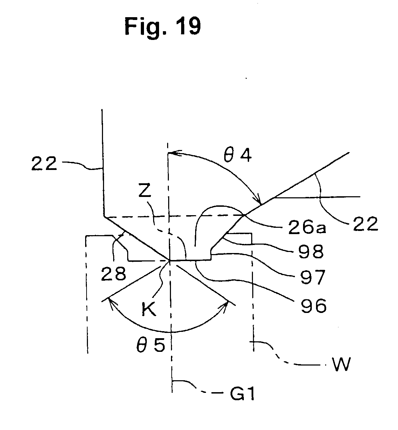

As shown in FIG. 16, the drill axis G1 is aligned with the rotation axis of the workpiece W, and then the cutting tool is fed along the rotation axis of the workpiece W so as to press the cutting edge 96 against the end face of the workpiece W, thereby forming spot-faced hole Z at the center of the end face. If the circumferential edge of the opening portion of the spot-faced hole must be chamfered, as shown in FIG. 19, a chamfering edge 98 corresponding to the chamfer is provided at the corner of the intersection between the side 22 and the margin 97 located on the outer side of the cutting edge 96. The shape of the cutting edge may be set in accordance with desired center-hole cutting.

The cutting tool of the present invention is not limited to the above-described respective embodiments, but may be embodied in many other specific forms without departing from the spirit of the invention. The above embodiments are described while mentioning a throwaway center drill which is formed from a rhombus tip or triangular tip through polishing of one corner or all corners of the tip. However, the throwaway center drill of the present invention is not limited thereto, but may be embodied in many other specific forms. The clamp means for clamping a throwaway center drill to a holder is described while mentioning a screw clamp type. However, the clamp means is not limited thereto. Furthermore, the throwaway center drill may be made from any appropriate material, such as cemented carbide or ceramic.

As described above, even when the cutting tool of the present invention is used with a machine in which a tool post is not located on the end-face side of a workpiece, the cutting tool may be attached to a main tool post located laterally with respect to the rotation axis of the workpiece, whereby center-hole cutting can be performed through end-face turning as in the case of conventional turning. Thus, through use of the cutting tool and the throwaway tip of the present invention, a center hole, particularly a shallow center hole, can be formed very efficiently on the end face of a small part or a precision shaft member having a small diameter, such as a shaft member used in OA equipment or precision equipment.

## Claims

1. A cutting tool (1; 41), characterized in that a throwaway center drill (21; 61) is clamped to a holder (2), said throwaway center drill (21; 61)having two cutting edges (26, 27; 66, 67) and a drill axis (G1) intersecting the longitudinal direction of said holder (2).

2. A cutting tool (51; 81), characterized in that a throwaway center drill (71; 91) is clamped to a holder (2), said throwaway center drill (71; 91) having one cutting edge (26; 96) and a drill axis (G1) intersecting the longitudinal direction of said holder.

3. A cutting tool as described in claim 1 or 2, wherein the longitudinal direction of said holder (2) and the drill axis (G1) intersect at a substantially perpendicular angle.

4. A cutting tool as described in claim 1, 2, or 3, wherein said throwaway center drill (21; 61; 71; 91) is clamped to an end of said holder (2).

5. A cutting tool as described in any one of claims 1 to 4, wherein said throwaway center drill (21; 61; 71; 91) assumes the shape of a polygonal plate and wherein a basal portion (31) thereof to be clamped to said holder is biased laterally with respect to the drill axis (G1) and is integrated with the cutting edge or edges (26, 27, 66, 67, 96).

6. A cutting tool as described in claim 5, wherein said holder (2) has a restraint wall (5, 6) for restraining a peripheral portion (23, 24) of the basal portion (31) of said polygonal-plate-shaped throwaway center drill (21; 61; 71; 91), and the peripheral portion (23, 24) of the basal portion (31) of said throwaway center drill is restrained by the restraint wall.

7. A cutting tool as described in any one of claims 1 to 6, wherein said throwaway center drill (21; 61; 71; 91) has a through-hole (33) formed in the basal portion (31) and a screw member (11) is inserted through the through-hole (33) and screwed into a tapped hole (9) formed in said holder (2) to thereby clamp said throwaway center drill (21; 61; 71; 91) to said holder (2).

8. A throwaway center drill (21; 61), characterized by assuming the shape of a polygonal plate and having two cutting edges (26; 27; 66; 67) and characterized in that a basal portion (31) thereof to be clamped to a holder (2) is biased laterally with respect to the drill axis (G1) passing between the cutting edges and is integrated with the cutting edges.

9. A throwaway center drill (71; 91), characterized by assuming the shape of a polygonal plate and having one cutting edge (26; 96) and characterized in that a basal portion (31) thereof to be clamped to a holder (2) is biased laterally with respect to the drill axis (G1) of the cutting edge and is integrated with the cutting edge.

10. A throwaway center drill, according to claim 8 or 9, wherein said polygonal plate is substantially in the shape of a rhombus (21; 61) or a triangle (71; 91).
